# EUROPÄISCHE PATENTSCHRIFT

(11) **EP 2 524 886 B1**
(45) Veröffentlichungstag und Bekanntmachung des Hinweises auf die Patenterteilung: **12.03.2014**
(21) Anmeldenummer: 12165692.0
(22) Anmeldetag: 26.04.2012
(51) Int. Cl.: B65G 65/36, B29C 31/00, B67D 7/64

(54) **Entnahmestation**
Removal station
Station de prélèvement

(30) Priorität: 16.05.2011 DE 202011100756 U
(43) Veröffentlichungstag der Anmeldung: 21.11.2012
(73) Patentinhaber: 2 Komponenten Maschinenbau GmbH, 51709 Marienheide-Rodt (DE)
(72) Erfinder: Röger, Uwe, 58540 Meinerzhagen (DE)
(74) Vertreter: Lippert, Stachow & Partner

(56) Entgegenhaltungen:
- EP-A1- 0 292 049
- EP-A1- 2 123 179
- DE-A1- 19 649 461
- JP-A- 59 031 221

## Beschreibung

Die Erfindung betrifft eine Entnahmestation zur Entnahme von fluiden Materialien als Füllgut aus mindestens einem Vorlagebehälter mit Boden, wobei die Entnahmestation einen Entnahmebereich aufweist, in welchem der Vorlagebehälter bei der Entnahme des fluiden Materials in seiner Entnahmeposition angeordnet ist, mit einer Fördereinrichtung zur Entnahme des fluiden Materials aus dem Vorlagebehälter, wobei die Fördereinrichtung einen als Ansaugorgan ausgebildeten Eintrittsbereich für das fluide Medium aufweist, und mit einer Folgeplatte, welche zur Förderung des Materials in den Behälter absenkbar ist, und mit einem Andockbereich, an welchem der Behälter von einer Ablageposition zum Entnahmebereich hin überführbar ist. Ferner betrifft die Erfindung ein Verfahren zur Entnahme von fluiden Materialien als Füllgut aus mindestens einem Vorlagebehälter.

An einer derartigen Entnahmestation werden also beispielsweise die Vorlagebehälter positioniert, um einer Kunststoffverarbeitungseinrichtung wie z.B. einer Spritzgießmaschine Komponenten einer Kunststoffformulierung, insbesondere Kunststoffkomponenten, zuzuführen, um einen Kunststoffgegenstand herzustellen. Die Vorlagebehälter können ein hohes Gewicht aufweisen, ohne Weiteres von 100 bis 200kg oder mehr. Oftmals wird das Füllgut dem Behälter mittels einer Entnahmevorrichtung entnommen, welche eine Folgeplatte aufweist, welche in den Behälter eingeführt und auf das Füllgut aufgesetzt wird, um dieses mit einem Anpressdruck zu beaufschlagen. Die Folgeplatte kann dann bis auf den Behälterboden abgesenkt werden, um den Vorlagebehälter praktisch vollständig zu entleeren. Es ist jedoch festzustellen, dass oftmals in dem Vorlagebehälter ein Restvolumen verbleibt, insbesondere wenn der Behälterboden nach unten durchgebogen ist, so dass dieses Restvolumen von der Fördereinrichtung nicht mehr erfasst und gefördert werden kann. Diese nicht förderbaren Restmengen können teilweise signifikante Mengen darstellen und sind oftmals insbesondere aufgrund der hohen Kosten des Füllgutes unerwünscht. Eine manuelle Förderung dieser Restmengen oder eine manuelle Restentleerung der Behälter scheidet jedoch aus praktischen Gründen zumeist aus.

Die JP 5903122 A1 beschreibt eine Entnahmestation, um Stahlfasern einem Behälter zu entnehmen, wobei der Behälter einen höhenverstellbaren Boden aufweist und die an der Behälteröffnung befindlichen Stahlfasern mittels einer Magnetfördereinrichtung dem Behälter entnommen werden.

Die EP 2123179 A1 beschreibt eine Entnahmeeinrichtung mit einem Behälter mit höhenverstellbarem Boden, wobei an der Behälteröffnung positioniertes Material mittels Schaufelrädern aus dem Behälter gefördert wird.

Der Erfindung liegt daher die Aufgabe zugrunde, eine gattungsgemäße Entnahmestation für fluide Materialien aus mindestens einem Vorlagebehälter dahingehend weiterzubilden, dass das Füllgut möglichst vollständig aus dem Vorlagebehälter entnommen werden kann.

Die Erfindung wird durch eine Entnahmestation nach Anspruch 1 sowie durch ein Verfahren nach Anspruch 16 gelöst, vorteilhafte Ausführungsformen ergeben sich aus den Unteransprüchen.

Erfindungsgemäß ist an dem Entnahmebereich der Entnahmestation eine höhenverstellbare Andrückeinrichtung vorgesehen, welche mit dem in seiner Entnahmeposition befindlichen Vorlagebehälter zusammenwirken kann. Die Andrückeinrichtung umfasst ein in der Entnahmeposition des Behälters an die Unterseite des Behälterbodens anlegbares Druckglied, sowie ein Andrückorgan, welches in eine Andruckstellung an dem Behälter überführbar ist und den Behälterboden relativ zu der Behälterwand druckbeaufschlagt, also unter Ausübung von vertikal aufwärts gerichteten Kräften auf den Behälterboden, wobei diese Kräfte relativ zu der Behälterwand ausgeübt werden, so dass der Behälterboden relativ zur Behälterwand von der Gewichtskraft des Füllgutes druckentlastet wird. Durch diese Druckausübung von unten auf den Behälterboden wird ein zusätzliches Ausbauchen des Behälterbodens nach unten (vertikal abwärts) relativ zu der Behälterwand vermindert oder aufgehoben und der relativ zur Behälterwand auf den Behälterboden ausgeübte, vertikal aufwärts gerichtete Druck kann hierbei derart hoch sein, dass der Behälterboden des vollständig oder teilweise gefüllten Behälters horizontal ausgerichtet, also eingeebnet, ist. Hierdurch ist eine zumindest teilweise oder vollständige Entnahme des Restvolumens des Behälters, welche sich bei nach unten durchgebogenem Behälterboden ergeben würde, von der Fördereinrichtung förderbar und verbleibendes Restvolumens an fluidem Material in dem Behälter wird teilweise oder zumindest im Wesentlichen vollständig vermieden. So hat es dann beispielsweise keinen Einfluss auf die aus dem Behälter entnehmbare Materialmenge, welche Position der Eintrittsbereich der Fördereinrichtung für das fluide Material, welcher als Ansaugorgan ausgebildet ist, relativ zu einem bestimmten Bereich des Behälterbodens, beispielsweise dem Bereich maximaler Ausbauchung, hat. Weiterhin kann hierdurch die Folgeplatte der Entnahmevorrichtung, welche zur Förderung des Materials in den Behälter abgesenkt wird, mit einer größeren Fläche oder vollflächig mit dem Behälterboden zur Anlage gebracht werden, als ohne ein Ausbauchen des Behälterbodens verhindernde erfindungsgemäße Ausgestaltung der Entnahmestation.

Nach einer ersten Variante der Erfindung ist das Druckglied bewegbar ausgebildet, so dass das Druckglied unter Lageveränderung an die Unterseite des Behälterbodens anlegbar und unter Lageveränderung desselben eine vertikal nach oben gerichtete Druckkraft auf den Behälterboden ausüben kann. Der Behälter als solcher, d.h. die Behälterwand, kann hierbei ortsfest verbleiben, die Behälterwand bzw. die untere Behälterkante kann auf dem Bodenbereich der Entnahmestation bzw. aufsitzen.

Nach einer zweiten Variante ist das Druckglied derart ausgebildet, dass dieses an die Behälterwand oder einen mit dieser gekoppelt bewegbaren Bereich des Behälters anlegbar ist, der Behälterboden durch ein Unterstützungsglied (Druckglied) unterstützt wird und die Behälterwand mittels der Druckeinrichtung in vertikaler Richtung verschoben wird, so dass der durchgewölbte Boden relativ zu der Behälterwand in einen weniger durchgewölbten oder ebenen Zustand überführt wird. Hierbei kann der untere Behälterrand von einer bodenseitigen Unterstützung vertikal beabstandet sein bzw. eine an der Behälterwand angreifende Unterstützung ist höhenverstellbar, insbesondere gegenüber dem Druckglied höhenverstellbar. Beispielsweise kann das Andrückorgan hierzu an der Behälteroberkante, einem umlaufenden Wulst oder radialen Vorsprüngen der Behälterwand angreifen. Der Behälterboden wird hierbei unterstützt, so dass dieser nicht oder in einem geringeren Ausmaß vertikal abwärts bewegbar ist, als die Behälterwand bei vertikaler Druckausübung auf diese. Für den Fall, dass der Behälterboden nach Aufsetzen des Behälters auf das Druckorgan (welches dann ortsfest sein kann) aufgrund seines Gewichtes dann nach oben durchgewölbt ist, so kann das Andrückorgan die Behälterwand mit vertikaler Druckausübung nach oben unterstützen, so das ein Durchbiegen des Behälterbodens verringert oder vollständig beseitigt wird (das Andrückorgan kann hierzu beispielsweise den Behälterrand ringförmig unterstützen und höhenverstellbar sein). Auch hierdurch wird der Behälterboden relativ zur Behälterwand nach oben angehoben. Gegebenenfalls kann eine seitliche Abstützung des Behälters vorgesehen sein.

Nach einer dritten Variante kann die Andrückeinrichtung derart ausgebildet sein, dass der Behälterboden um ein gewisses Ausmaß vertikal nach oben lageverändert wird, wobei gleichzeitig oder zeitlich nachfolgend die Behälterwand vertikal nach unten lageverändert wird. Auch hierdurch ist eine relative Lageveränderung von Behälterboden und Behälterwand ermöglicht und ein Ausbauchen des Behälterbodens nach unten teilweise oder vollständig aufgehoben.

Das Druckglied ist vorzugsweise derart positioniert oder positionierbar, dass dieses radial einwärts beabstandet von der Behälterwand an dem Behälterboden vorzugsweise dessen Unterseite, angreift.

Vorzugsweise ist das Druckglied mittels der Andrückeinrichtung in eine gegenüber der Andruckstellung zurückgezogene Neutralstellung überführbar, in welche der Behälter in den Entnahmebereich überführbar ist. Hierdurch wird die Überführung des Vorlagebehälters aus einer Ablageposition, in welcher der Behälter beispielsweise durch eine Transportvorrichtung wie einen Gabelstapler im Bereich der Entnahmestation abgesetzt wird, auf einfache Weise in die Entnahmeposition des Behälters überführbar, in welcher die Fördereinrichtung zur Entnahme des fluiden Materials aus dem Vorlagebehälter an diesem ankoppeln kann. Beispielsweise kann hierzu der Vorlagebehälter auf einer Transporteinrichtung der Entnahmestation wie z.B. einer durchgehenden Transportbahn wie einer Rollenbahn oder einer Schieneneinrichtung aus der Ablageposition in die Entnahmeposition überführt werden. Diese Transporteinrichtung bzw. -bahn kann Bestandteil der Entnahmevorrichtung sein. Die Transporteinrichtung kann sich bis zur Entnahmeposition des Behälters erstrecken. Der Vorlagebehälter kann hierbei auf der Transporteinrichtung aufsitzen, also von dieser unterstützt werden, wobei der Vorlagebehälter beispielsweise manuell mittels der Transporteinrichtung in seine Entnahmeposition überführt werden kann, beispielsweise durch manuelles Verschieben. Aufgrund des zumeist hohen Gewichtes des Vorlagebehälters sitzt dieser bei dieser Verschiebung zumeist fortwährend auf der Transporteinrichtung auf, wobei der untere Behälterrand von der Transporteinrichtung oder einem anderen Bereich der Entnahmestation unterstützt werden kann. Dadurch, dass das Druckglied in eine zurückgezogene Neutralstellung überführbar ist, kann der Vorlagebehälter an der Transporteinrichtung geführt über das zurückgezogene Druckglied geschoben werden, wobei bei dem in der Entnahmeposition angeordneten Behälter das Druckglied dann in Richtung auf den Behälterboden nach oben ausgefahren wird. Die Transporteinrichtung weist eine Durchbrechung oder Aussparung auf, durch welche das Druckglied und/oder die Andrückeinrichtung die Transporteinrichtung von untern durchgreifen kann und in Wechselwirkung mit dem Behälter bringbar ist. Ein Anheben des Behälters, um diesen über das Druckglied anzuheben, ist hierdurch nicht notwendig. Dieses gilt auch dann, wenn der Behälter einen umgebördelten Rand aufweist, was allgemein bei einem an der erfindungsgemäßen Entnahmestation positioniertem Behälter gegeben sein kann, so dass der untere Behälterrand nach unten über den Boden vorsteht. Allgemein kann somit der Behälter derart ausgebildet sein, dass der Behälterboden bei Positionierung des Behälters an der Entnahmestation einen nach unten durchgewölbten Boden aufweist (ohne Wechselwirkung mit dem Druckglied), oder aber auch bereits bei bodenseitiger Aufstellung, wenn der untere Behälterrand vollumfänglich durch einen Tragboden unterstützt wird.

Mittels der Andrückeinrichtung kann der Behälterboden gegenüber der Neutralstellung der Andrückeinrichtung zumindest bereichsweise relativ zur Behälterwand angehoben werden, insbesondere im mittleren Bereich des Behälterbodens.

Nach einer besonders bevorzugten Ausführungsform ist die Andrückeinrichtung derart ausgelegt oder eingestellt, dass der Behälterboden, welcher bei Neutralstellung der Andrückeinrichtung nach unten durchgewölbt ist, in einer ausgefahrenen Stellung des Druckgliedes zumindest im Wesentlichen eben angeordnet ist. Hierbei kann die Durchwölbung des Behälterbodens, welche sich aus der Wölbungshöhe des Boden ergibt, also dem Höhenunterschied zwischen dem maximal durchgewölbten Boden und der ebenen Bodenanordnung, mittels der Andrückeinrichtung weitestgehend ausgeglichen werden, beispielsweise bis auf ≤ 50% oder ≤ 25-33% oder vorzugsweise ≤ 10-20% oder besonders bevorzugt ≤ 5-10% der ursprünglichen maximalen Durchwölbung. Besonders bevorzugt wird die Durchwölbung vollständig mittels der Andrückeinrichtung aufgehoben, so dass der Behälterboden eben angeordnet ist, wodurch eine praktisch vollständige Entnahme des Füllgutes ermöglicht wird.

Die Andruckstellung des Druckgliedes, bei welcher eine zumindest im Wesentlichen ebene Bodenanordnung bewirkt oder angenommen wird, kann auf verschiedene Weise bestimmt werden. Zum Einen kann die Andruckkraft des Druckgliedes an dem Behälterboden ermittelt werden. Diese kann auf einen Wert eingestellt werden, welcher dem Füllgewicht des Behälters (also Gewicht des Füllgutes ohne Behältergewicht) entspricht. Hierbei kann das Füllgutgewicht gesondert ermittelt werden, beispielsweise durch Bestimmung des Gesamtgewichtes des Behälters abzüglich eines bekannten Behältergewichtes, oder das Füllgutgewicht wird dem jeweiligen Vorlagebehälter zugeordneten Unterlagen wie Begleitpapieren oder Lieferscheinen zu dem jeweiligen Behälter entnommen. Alternativ oder zusätzlich kann die zumindest im Wesentlichen ebene Bodenanordnung auch geometrisch ermittelt werden, beispielsweise durch Bestimmung der Höhe des Überstandes eines umgebördelten Randbereiches des Behälters im Bereich der Behälteraußenwand (entsprechend minimaler bzw. keiner Durchwölbung) und dem vertikalen Abstand der Behälterunterkante zu dem mittleren Bodenbereich des Behälters (Bereich maximaler Durchwölbung). Hierdurch ist ermittelbar, um welches Ausmaß das Druckglied auszufahren ist. Hierbei kann weiterhin die Höhe berücksichtigt werden, in welcher das Druckglied in seiner maximal zurückgezogenen Neutralstellung angeordnet ist, in Bezug auf die Höhe der Aufstellebene des Vorlagebehälters (Niveau des den Behälter unterstützenden Bodenbereichs bzw. der den Behälter unterstützenden Transporteinrichtung). Nach einer weiteren Alternative, welche gegebenenfalls in Kombination mit den oben beschriebenen Ausführungsbeispielen realisiert sein kann, kann das Kraft-Weg-Diagramm des Druckgliedes bei dessen Vorschub bzw. beim Anheben des Behälterbodens relativ zu der Behälterwand aufgezeichnet werden. Aus diesem Kraft-Weg-Diagramm ist die Vorschubstellung des Druckgliedes ableitbar, in welcher dieses das gesamte Füllgewicht des Behälters unterstützt, so dass dann also der Boden in seiner zumindest im Wesentlichen ebenen Stellung angeordnet ist. Nach einer weiteren Alternative, gegebenenfalls in Kombination mit den oben genannten Alternativen, kann mittels Sensoren die Lage des Vorlagebehälters überwacht werden, so dass bei einem Anheben des Behälters mittels des Druckgliedes eine weitere Erhöhung der Druckkraft des Druckgliedes auf den Behälterboden unterbunden wird. Es versteht sich, dass eine weitere Erhöhung der Druckkraft des Druckgliedes auf die Unterseite des Behälterbodens (in Richtung vertikal aufwärts) zu vermeiden ist, wenn der Behälterboden zumindest im Wesentlichen eben angeordnet ist, um ein Ausbauchen des Behälterbodens nach oben hin zu vermeiden.

Vorzugsweise ist das Druckglied flächig an die Bodenunterseite des Behälters anlegbar, wodurch ein flächiges Anheben des Behälterbodens ermöglicht und lokale Überbeanspruchungen des Behälterbodens vermieden werden.

Nach einer vorteilhaften Ausbildung der Entnahmestation ist die Folgeplatte zur Füllgutentnahme aus dem Behälter gegen die Füllgutoberfläche anlegbar und gegebenenfalls druckbeaufschlagbar ist. Die Folgeplatte kann hierbei eine Entnahmeöffnung aufweisen, durch welche mittels der Fördereinrichtung das Füllgut aus dem Behälter förderbar ist. Das Druckglied ist hierbei derart ausgebildet, dass dessen Druckbeaufschlagung (Druckkraft) gegen den Behälterboden nach oben geringer ist als die Druckbeaufschlagung der Folgeplatte vertikal abwärts gerichtet, so dass durch das Druckglied eine Abwärtsbewegung der Folgeplatte, beispielsweise bei nach oben durchgewölbtem Boden, nicht behindert wird. Vorzugsweise ist das Druckglied derart ausgebildet, dass dieses bei Druckausübung, welcher die von dem Druckglied auf dem Behälterboden ausgeübte Druckkraft übersteigt, in Richtung auf seine Neutralstellung zurückfahrbar ist. Hierdurch wird gewährleistet, dass durch das Druckglied eine Bewegung der Folgeplatte, welche zur Förderung des Füllgutes oder insbesondere zur maximalen Förderung des Füllgutes im Hinblick auf eine möglichst vollständige Entleerung des Behälters, nicht behindert wird.

Nach einer weiteren besonders bevorzugten Ausführungsform weist die Entnahmestation zumindest zwei Entnahmebereiche, zumindest zwei Fördereinrichtungen und zumindest zwei Andockbereiche zur gleichzeitigen Anordnung bzw. Entleerung von mindestens zwei zu entleerenden Vorlagebehältern auf. Jede der zumindest zwei Entnahmebereiche kann erfindungsgemäß mit einer höhenverstellbaren Andrückeinrichtung sowie einem Druckglied gemäß Anspruch 1 ausgestattet sein. Vorzugsweise weisen die beiden Andrückeinrichtungen eine gemeinsame Druckerzeugungseinrichtung zur Druckbeaufschlagung der Andrückeinrichtungen auf, wodurch der apparative Aufwand minimiert werden kann. Die beiden Andrückeinrichtungen können hierbei gleichzeitig betätigbar sein. Vorzugsweise sind die mindestens beiden Andrückeinrichtungen unabhängig voneinander betätigbar, so dass die beiden Druckglieder unabhängig voneinander mit jeweils angepasstem Anpressdruck an den jeweiligen Behälterboden angedrückt und/oder unabhängig voneinander in eine an den jeweiligen Vorlagebehälter angepasste Vorschubstellung überführbar sind. Gegebenenfalls kann hierzu die jeweilige Druckeinrichtung, welche das Druckglied betätigt; mit einer eigenständigen Steuerung versehen sein, welche eine unabhängige Betätigung des jeweiligen Druckgliedes ermöglicht.

Die Komponenten in dem Vorlagebehälter können beispielsweise ein polymeres Material sein, welches eine Basiskomponente des Kunststoffmaterials darstellt, ein Härter für dieses, ein Farbstoff oder farbgebendes Mittel oder dergleichen. Die Kunststoffverarbeitungseinrichtung kann beispielsweise eine Spritzgießmaschine oder sonstige Formungsmaschine zur Herstellung eines Kunststoffgegenstandes sein, oder eine dieser in Prozessrichtung vorgelagerte Maschine, beispielsweise eine Mischeinrichtung.

Die Erfindung sei nachfolgend beispielhaft beschrieben und anhand der Figuren erläutert. Es zeigen:

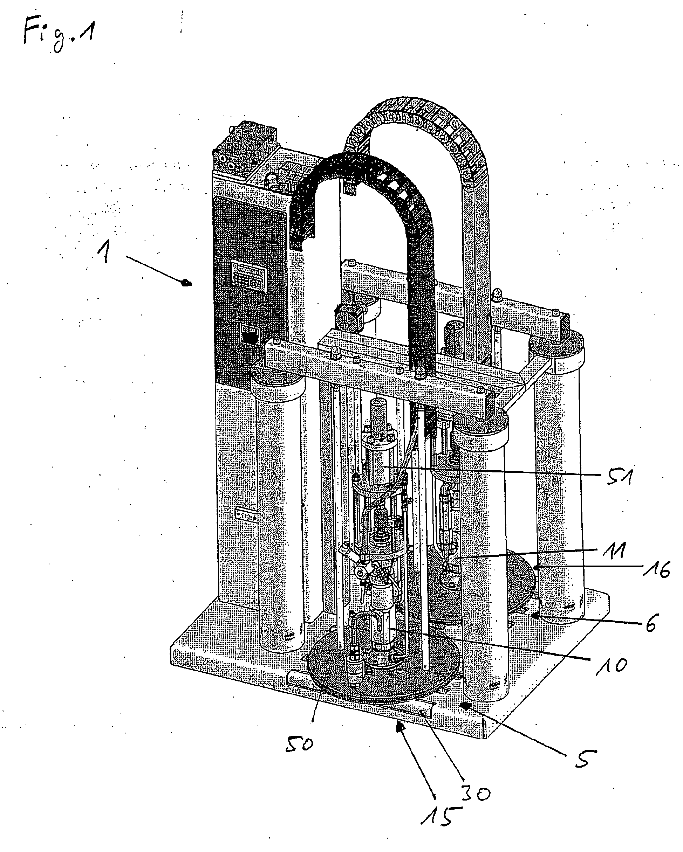

- Figur 1, 2: eine Darstellung einer erfindungsgemäßen Entnahmestation in perspektivischer Ansicht (Fig. 1) und von unten (Fig. 2),
- Figur 3: die Andrückeinrichtung mit Druckglied in seiner Neutralstellung und an diesem angeordneten Behälter,
- Figur 4: eine schematische Darstellung des Druckgliedes in Druckbeaufschlagung des Behälterbodens in ebener Anordnung.

Die erfindungsgemäße Entnahmestation 1 dient der Entnahme von fluiden Materialien als Füllgut 4 aus mindestens einem Vorlagebehälter 2 mit Boden 2a. Das fluide Material kann flüssig pastös oder auch sehr hochviskos sein, solange dieses förderbar ist. Die Entnahmestation 1 weist einen Entnahmebereich 5 auf, in welchem der Vorlagebehälter 2 bei der Entnahme des fluiden Materials in seiner Entnahmeposition angeordnet ist. Ferner ist einer Fördereinrichtung 10 zur Entnahme des fluiden Materials aus dem Vorlagebehälter wie eine Förderpumpe vorgesehen. Weiterhin umfasst die Entnahmestation einen Andockbereich 15, an welchem der Behälter von einer Ablageposition zum Entnahmebereich hin überführbar ist. Erfindungsgemäß ist an dem Entnahmebereich 5 eine höhenverstellbare Andrückeinrichtung 20 vorgesehen, welche ein in der Entnahmeposition des Behälters an die Unterseite des Behälterbodens 2a anlegbares Druckglied 22 umfasst, und ein Andrückorgan 23, welches in eine Andruckstellung an dem Behälter 2 überführbar ist und den Behälterboden 2a relativ zu der Behälterwand 2b druckbeaufschlagt, so dass der Behälterboden relativ zur Behälterwand von der Gewichtskraft des Füllgutes druckentlastet wird. Hierdurch können aufgrund der Bodendurchwölbung sonst nicht entnehmbare Mengen an Füllgut verringert oder minimiert werden.

Nach dem Ausführungsbeispiel ist das Druckglied 22 als Andrückorgan 23 ausgeführt, welches in einer Andruckstellung an die Unterseite 2c des Behälterbodens 2a anlegbar ist und den Behälterboden vertikal nach oben gerichtet relativ zur Behälterwand 2b druckbeaufschlagt (alternativ kann das Andrückorgan auch zum Angriff an die Behälterwand ausgebildet sein, mittels welchem bei währender Anlage des Druckgliedes an der Behälterbodenunterseite die Behälterwand 2b relativ zum Behälterboden vertikal nach unten bewegbar ist). Das Druckglied ist hier als höhenverstellbarer Stempel ausgeführt.

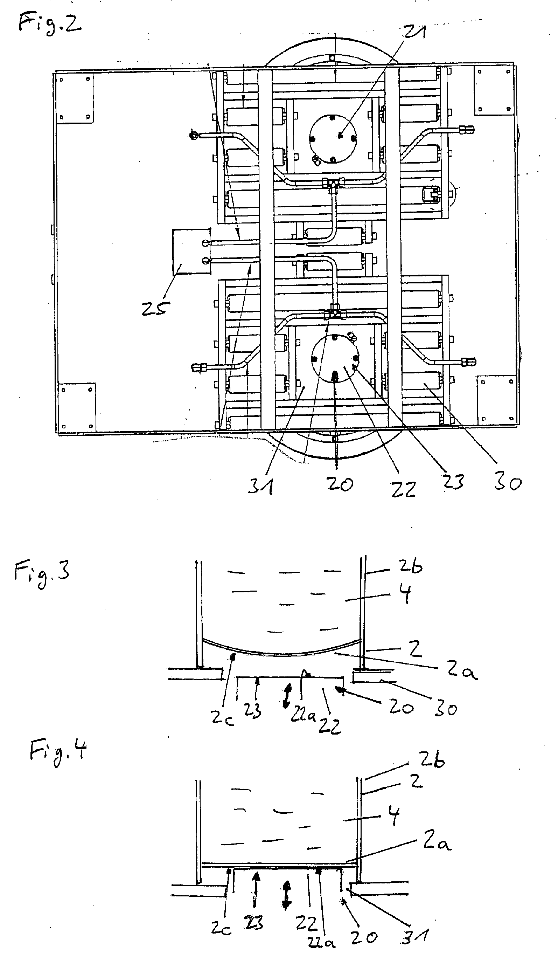

Das Druckglied 22 ist mittels der Andrückeinrichtung 20 in eine gegenüber der Andruckstellung zurückgezogene Neutralstellung überführbar ist, in welcher der Behälter in den Entnahmebereich überführbar ist (Fig. 3). Das Druckglied 22 ist in der Neutralstellung bis auf Höhe oder unterhalb des Niveaus der Unterkante 2d des Vorlagebehälters an dem Andockbereich 15 angeordnet.

Ferner ist die Andrückeinrichtung 20 zur Ausübung einer Druckkraft auf die Unterseite des Behälterbodens 2a ausgelegt oder eingestellt, welche den Behälterboden gegenüber der Neutralstellung der Andrückeinrichtung zumindest bereichsweise relativ zur Behälterwand 2b anhebt (Fig. 4). Die Andrückeinrichtung weist hierzu ein Huborgan wie einen Pneumatik- oder Hydraulikstempel auf. Allgemein kann jedoch auch eine andere geeignete Vorschubeinrichtung vorgesehen sein, wie z.B. auch ein Faltenbalg.

Die Andrückeinrichtung 20 ist ausgelegt oder eingestellt, so dass der Behälterboden 2a, welcher bei Neutralstellung der Andrückeinrichtung nach unten durchgewölbt ist, zumindest im Wesentlichen eben angeordnet ist (Fig. 4). Die Andrückeinrichtung 20 ist zur Ausübung einer Druckkraft auf den Behälterboden 2a ausgelegt oder in ihrer Vorschubposition eingestellt, welche dem Füllgewicht eines an dem Entnahmebereich positionierten Behälters entspricht. Das Druckglied 22 weist einen Anlagebereich 22a zur flächigen Anlage an die Bodenunterseite 2c des Behälters auf. Beim Anheben des Behälterbodens gegenüber der Behälterwand mittels des Druckgliedes kann der Boden über dessen Flächenerstreckung zumindest im Wesentlichen eben angeordnet werden.

An dem Entnahmebereich 5 ist weiter eine Folgeplatte 50 vorgesehen, welche mittels der Einrichtung 51 höhenverstellbar und zur Füllgutentnahme aus dem Behälter 2 gegen die Füllgutoberfläche anlegbar und vorzugsweise druckbeaufschlagbar ist. Die Folgeplatte 50 ist hier mit einem Anpressdruck gegen die Füllgutoberfläche beaufschlagbar oder zur Beaufschlagung eingestellt, welcher den Anpressdruck des Druckgliedes 22 gegen den Behälterboden 2a übersteigt. Die Andrückeinrichtung 20 ist bei ausgefahrenem Druckglied 22 bei Druckausübung der Folgeplatte 50 zumindest teilweise oder vollständig in seine Neutralstellung zurückfahrbar, blockiert also nicht eine Bewegung der Folgeplatte, falls der Behälterboden durch das Druckglied (geringfügig) nach oben durchgewölbt sein sollte.

Dadurch, dass das Druckglied in eine zurückgezogene Neutralstellung überführbar ist, kann der Vorlagebehälter an der an der Station vorgesehenen Transporteinrichtung 30 wie z.B. einer Rollenbahn in seine Entnahmeposition verschoben und über das zurückgezogene Druckglied geschoben werden, wobei bei dem in der Entnahmeposition angeordneten Behälter das Druckglied dann in Richtung auf den Behälterboden nach oben ausgefahren wird. Die Transporteinrichtung 30 weist eine Durchbrechung 31 oder Aussparung auf, durch welche das Druckglied und/oder die Andrückeinrichtung die Transporteinrichtung von unten durchgreifen kann und in Wechselwirkung mit dem Behälter bringbar ist. Ein Anheben des Behälters, um diesen über das Druckglied anzuheben, ist hierdurch nicht notwendig.

Ferner weist die Entnahmestation nach dem Ausführungsbeispiel zwei Entnahmebereiche 5, 6, zwei Fördereinrichtungen 10, 11 und zwei Andockbereiche 15, 16 zur gleichzeitigen Anordnung und ggf. gleichzeitigen Entleerung von mindestens zwei zu entleerenden Vorlagebehältern 2 (nur einer dargestellt) an der Entnahmestation auf, wobei im einfachsten Fall auch nur jeweils einer/eine der genannten Bereiche/Einrichtungen vorgesehen sein kann. Den beiden Andrückeinrichtungen 20, 21 ist eine gemeinsame Druckerzeugungseinrichtung 25 zur Druckbeaufschlagung der beiden Andrückeinrichtungen 20, 21 zugeordnet, wobei die mindestens beiden Andrückeinrichtungen 20, 21 gleichzeitig betätigbar sind. Die beiden Andrückeinrichtungen 20, 21 sind unabhängig voneinander betätigbar, hier zeitlich unabhängig und/oder in Bezug auf die Höhe des Anpressdrucks des Druckgliedes bzw. der Vorschubstellung des Druckgliedes in Richtung auf den Behälter.

Die jeweilige Andrückeinrichtung 20, 21 kann eine Kraft-Weg-Anzeige (nicht dargestellt) in Bezug auf die Andrückeinrichtung aufweisen, so dass der Vorschubweg des Druckgliedes und/oder des Andrückorgans beim Ausfahren in Abhängigkeit von der auf den Behälterboden ausgeübten Druckkraft angezeigt und ausgewertet werden kann, um Überbelastungen des Bodens zu vermeiden, gegebenenfalls auch um aus dem Weg-Kraft-Diagramm die Position des Druckgliedes mit ebenem Behälterboden ableiten zu können.

Der Vorlagebehälter 2 enthält ein Füllgut mit einem Gewicht von ≥ 20-50 kg, beispielsweise ca. 200-300kg.

## Patentansprüche

1. Entnahmestation (1) zur Entnahme von fluiden Materialien als Füllgut (4) aus mindestens einem Vorlagebehälter (2) mit Boden (2a), wobei die Entnahmestation einen Entnahmebereich (5) aufweist, in welchem der Vorlagebehälter (2) bei der Entnahme des fluiden Materials in seiner Entnahmeposition angeordnet ist, mit einer Fördereinrichtung (10) zur Entnahme des fluiden Materials aus dem Vorlagebehälter, wobei die Fördereinrichtung einen als Ansaugorgan ausgebildeten Eintrittsbereich für das fluide Medium aufweist, und mit einer Folgeplatte (50), welche zur Förderung des Materials in den Behälter absenkbar ist, und wobei die Entnahmestation einen Andockbereich (15) umfasst, an welchem der Behälter von einer Ablageposition zum Entnahmebereich hin überführbar ist, wobei an dem Entnahmebereich (5) eine höhenverstellbare Andrückeinrichtung (20) vorgesehen ist, welche ein in der Entnahmeposition des Behälters an die Unterseite des Behälterbodens (2a) anlegbares Druckglied (22) umfasst, und ein Andrückorgan (23), welches in eine Andruckstellung an dem Behälter (2) überführbar ist und den Behälterboden (2a) relativ zu der Behälterwand (2b) druckbeaufschlagt, so dass der Behälterboden relativ zur Behälterwand von der Gewichtskraft des Füllgutes druckentlastet wird.

2. Entnahmestation nach Anspruch 1, **dadurch ge-kennzeichnet**, dass (i) das Druckglied (22) als Andrückorgan (23) ausgeführt ist, welches in einer Andruckstellung an die Unterseite (2c) des Behälterbodens (2a) anlegbar ist und den Behälterboden vertikal nach oben gerichtet relativ zur Behälterwand (2b) druckbeaufschlagt, oder dass (ii) das Andrückorgan (23) zum Angriff an die Behälterwand ausgebildet ist, mittels welchem bei währender Anlage des Druckgliedes an der Behälterbodenunterseite die Behälterwand (2b) relativ zum Behälterboden vertikal nach unten bewegbar ist.

3. Entnahmestation nach Anspruch 1 oder 2, **dadurch gekennzeichnet, dass** das Druckglied (22) mittels der Andrückeinrichtung (20) in eine gegenüber der Andruckstellung zurück gezogene Neutralstellung überführbar ist, in welcher der Behälter in den Entnahmebereich überführbar ist.

4. Entnahmestation nach Anspruch 3, **da-durch gekennzeichnet**, dass das Druckglied (22) in der Neutralstellung bis auf Höhe oder unterhalb des Niveaus der Unterkante (2d) des Vorlagebehälters an dem Andockbereich (15) angeordnet ist.

5. Entnahmestation nach einem der Ansprüche 1 bis 4, **da - durch gekennzeichnet**, dass die Andrückeinrichtung (20) zur Ausübung einer Druckkraft auf die Unterseite des Behälterbodens (2a) ausgelegt oder eingestellt ist, welche den Behälterboden gegenüber der Neutralstellung der Andrückeinrichtung zumindest bereichsweise relativ zur Behälterwand (2b) anhebt.

6. Entnahmestation nach einem der Ansprüche 1 bis 5 in Kombination mit Anspruch 3, **da-durch gekennzeichnet**, dass die Andrückeinrichtung (20) ausgelegt oder eingestellt ist, so dass der Behälterboden (2a), welcher bei Neutralstellung der Andrückeinrichtung nach unten durchgewölbt ist, zumindest im Wesentlichen eben angeordnet ist.

7. Entnahmestation nach einem der Ansprüche 1 bis 6, **dadurch gekennzeichnet, dass** das Druckglied (22) flächig an die Bodenunterseite (2c) des Behälters anlegbar ist.

8. Entnahmestation nach einem der Ansprüche 1 bis 7, **dadurch gekennzeichnet, dass** die Folgeplatte (50) zur Füllgutentnahme aus dem Behälter (2) gegen die Füllgutoberfläche druckbeaufschlagbar ist, und dass die Folgeplatte (50) mit einem Anpressdruck gegen die Füllgutoberfläche beaufschlagbar oder zur Beaufschlagung eingestellt ist, welcher den Anpressdruck des Druckgliedes (22) gegen den Behälterboden (2a) übersteigt.

9. Entnahmestation nach Anspruch 8 und Anspruch 3, **dadurch ge- kennzeichnet**, dass die Andrückeinrichtung (20) bei ausgefahrenem Druckglied (22) bei Druckausübung der Folgeplatte (50) zumindest teilweise in seine Neutralstellung zurückfahrbar ist.

10. Entnahmestation nach einem der Ansprüche 1 bis 9, **da**- **durch gekennzeichnet**, dass das Druckglied (22) mittels eines Pneumatik- oder Hydraulikzylinders (24) betätigbar ist.

11. Entnahmestation nach einem der Ansprüche 1 bis 10, **da-durch gekennzeichne**t, dass mindestens zwei Entnahmebereiche (5, 6), zwei Fördereinrichtungen (10, 11) und zwei Andockbereiche (15, 16) zur gleichzeitigen Anordnung und gegebenenfalls gleichzeitigen Entleerung von mindestens zwei zu entleerenden Vorlagebehältern (2, 3) an der Entnahmestation vorgesehen sind.

12. Entnahmestation nach Anspruch 11, **dadurch ge** - **kennzeichnet**, dass die beiden Andrückeinrichtungen (20, 21) eine gemeinsame Druckerzeugungseinrichtung (25) zur Druckbeaufschlagung der beiden Andrückeinrichtungen (20, 21) aufweisen.

13. Entnahmestation nach Anspruch 11 oder 12, **dadurch gekennzeichnet , dass** die mindestens beiden Andrückeinrichtungen (20, 21) gleichzeitig betätigbar sind.

14. Entnahmestation nach Anspruch 11 oder 12, **dadurch gekennzeichnet, dass** die mindestens beiden Andrückeinrichtungen (20, 21) unabhängig voneinander betätigbar sind, vorzugsweise zeitlich unabhängig und/oder in Bezug auf die Höhe des Anpressdrucks des Druckgliedes bzw. der Vorschubstellung des Druckgliedes.

15. Entnahmestation nach einem der Ansprüche 1 bis 14, **da** - **durch gekennzeichnet,** dass die jeweilige Andrückeinrichtung (20, 21) eine Kraft-Weg-Anzeige in Bezug auf die Andrückeinrichtung aufweist.

16. Verfahren zur Entnahme von fluiden Materialien als Füllgut (4) aus mindestens einem Vorlagebehälter (2) mit Boden (2a) an einer Entnahmestation (1), wobei die Entnahmestation einen Entnahmebereich (5) aufweist, in welchem der Vorlagebehälter (2) bei der Entnahme des fluiden Materials in seiner Entnahmeposition angeordnet wird, mit einer Fördereinrichtung (10), welche zur Entnahme des fluiden Materials aus dem Vorlagebehälter betätigt wird, wobei der Eintrittsbereich der Fördereinrichtung für das fluide Medium als Ansaugorgan ausgebildet ist, und mit einer Folgeplatte, welche zur Förderung des Materials in den Behälter abgesenkt wird, sowie mit einem Andockbereich (15), an welchem der Behälter von einer Ablageposition zum Entnahmebereich hin überführt wird, wobei an dem Entnahmebereich (5) eine höhenverstellbare Andrückeinrichtung (20) betätigt wird, welche ein Druckglied (22) umfasst, welches in der Entnahmeposition des Behälters an die Unterseite des Behälterbodens (2a) angelegt wird, und dass ein Andrückorgan (23) in eine Andruckstellung an dem Behälter (2) überführt wird und den Behälterboden (2a) relativ zu der Behälterwand (2b) druckbeaufschlagt und den Behälterboden relativ zur Behälterwand von der Gewichtskraft des Füllgutes druckentlastet, so dass ein Ausbauchen des Behälterbodens nach unten relativ zu der Behälterwand vermindert oder aufgehoben wird.

17. Verfahren nach Anspruch 16, **dadurch gekennzeichnet, dass** die Andrückeinrichtung (20) zur Ausübung einer Druckkraft auf den Behälterboden (2a) ausgelegt oder eingestellt ist, welche dem Füllgewicht eines an dem Entnahmebereich positionierten Behälters entspricht.

## Claims

1. Removal station (1) for the removal of fluid materials as charge (4) from at least one reservoir (2) having a bottom (2a), wherein said removal station includes a removal zone (5), in which during the removal of the fluid material said reservoir (2) is arranged in its removal position, said removal station comprising a conveying arrangement (10) for the removal of the fluid material from the reservoir, said conveying arrangement including an entry zone for the fluid medium which is constructed as an intake element, and comprising a follow-up plate (50), which can be lowered into the reservoir for conveying the material, and wherein the removal station comprises a docking zone (15) at which said reservoir can be transferred from a position of deposit toward the removal zone, wherein at said removal zone (5) a height-adjustable pressing device (20) is provided, which comprises a compression member (22) that can be applied against the lower side of the container bottom (2a) in the removal position of said reservoir, and a pressing element (23) that can be moved into a pressing position against said reservoir (2) while applying pressure on said reservoir bottom (2a) relative to the reservoir wall (2b) so that the reservoir bottom is relieved of the weight of the charge relative to the reservoir wall.

2. Removal station according to claim 1, **characterized in that** (i) said compression member (22) is constructed as a pressing element (23), which in a pressing position can be applied against the lower side (2c) of the reservoir bottom (2a) and applies pressure on the reservoir bottom in a vertically upwardly oriented direction relative to the reservoir wall (2b), or that (ii) said pressing element (23) is constructed for engaging said reservoir wall, and said reservoir wall (2b) can be moved vertically downwards relative to the reservoir bottom by means of said engagement while the compression member continues to be applied against the lower side of the reservoir bottom.

3. Removal station according to claim 1 or 2, **characterized in that** the compression member (22) can be moved by means of the pressing device (20) into a retracted neutral position with respect to the pressing position in which the reservoir can be transferred to the removal zone.

4. Removal station according to claim 3, **characterized in that** the compression member (22) in its neutral position is arranged at the docking zone (15) up to the level or below the level of the lower edge (2d) of the reservoir.

5. Removal station according to one of the claims 1 to 4, **characterized in that** the pressing device (20) is designed or adjusted for applying a pressure force on the lower side of the reservoir bottom (2a) which raises the reservoir bottom relative to the reservoir wall (2b) at least in certain areas.

6. Removal station according to one of the claims 1 to 5, in combination with claim 3, **characterized in that** the pressing device (20) is designed or set in such a manner that the reservoir bottom (2a), which bulges downwardly in the neutral position of the pressing device, is arranged at least substantially plane.

7. Removal station according to one of the claims 1 to 6, **characterized in that** the pressure member (22) can be applied against the lower side (2c) of the bottom of the reservoir in a planar manner.

8. Removal station according to one of the claims 1 to 7, **characterized in that** for the removal of the charge from the reservoir (2), pressure can be applied on said follow-up plate (50) against the surface of the charge and that the followup plate (50) can be charged with or is set for a contact pressure against the surface of the charge which exceeds the contact pressure of the pressure member (22) against the reservoir bottom (2a).

9. Removal station according to claim 8 and claim 3, **characterized in that** in the extended position of the pressure member (22) and during pressure exertion of the follow-up plate (50), said pressing device (20) can be returned to its neutral position at least partially.

10. Removal station according to one of the claims 1 to 9, **characterized in that** said pressure member (22) can be actuated by means of a pneumatic or hydraulic cylinder (24).

11. Removal station according to one of the claims 1 to 10, **characterized in that** there are provided at said removal station at least two removal zones (5, 6), two conveying devices (10, 11), and two docking zones (15, 16) for the simultaneous arrangement and if necessary simultaneous emptying of at least two reservoirs (2, 3) to be emptied.

12. Removal station according to claim 11, **characterized in that** said two pressing devices (20, 21) have a common pressure generation device (25) for applying pressure on said two pressing devices (20, 21).

13. Removal station according to claim 11 or 12, **characterized in that** said at least two pressing devices (20, 21) can be actuated simultaneously.

14. Removal station according to claim 11 or 12, **characterized in that** said at least two pressing devices (20, 21) can be actuated independently, preferably time-independently and/or independently with regard to the height of the pressing pressure of the pressure member or with regard to the feed position of the pressure member.

15. Removal station according to one of the claims 1 to 14, **characterized in that** the respective pressing device (20, 21) includes a force/path indication relating to the pressing device.

16. Process for the removal of fluid materials as charge (4) from at least one reservoir (2) having a bottom (2a) at a removal station (1), wherein said removal station includes a removal zone (5) where said reservoir (2) is arranged in its removal position during the removal of the fluid material, comprising a conveying device (10) which is operated for the removal of the fluid material from the reservoir, wherein the entry zone of the conveying device for the fluid medium is constructed as an intake element, and comprising a follow-up plate that is lowered into the reservoir for the removal of the material, and a docking zone (15) at which said reservoir is transferred from a position of deposit to the removal zone, wherein a height-adjustable pressing device (20) is operated at the removal zone (5) which comprises a pressure member (22), which in the removal position of the reservoir is applied against the lower side of the reservoir bottom (2a), and wherein a pressing element (23) is moved to a pressing position at the reservoir (2) and exerts pressure on the reservoir bottom (2a) relative to the reservoir wall (2b) and relieves said reservoir bottom from the pressure of the weight of the charge relative to said reservoir wall so that a bulging of the reservoir bottom downwards relative to the reservoir wall is reduced or cancelled.

17. Process according to claim 16, **characterized in that** the pressing device (20) is designed or set for applying a pressure force on the reservoir bottom (2a) which corresponds to the filling weight of a reservoir positioned at the removal zone.

## Revendications

1. Station de prélèvement (1) destinée au prélèvement des matières fluides comme une charge (4) hors d'au moins un réservoir (2) comprenant un fond (2a), ladite station de prélèvement comprenant une zone de prélèvement (5) où le réservoir (2), lors du prélèvement de la matière fluide, est arrangé en sa position de prélèvement, avec un dispositif transporteur (10) pour le prélèvement de la matière fluide hors du réservoir, le dispositif transporteur comprenant une zone d'entrée formée comme un organe aspirateur pour le milieu fluide, et avec une plaque de suite (50) à déplacement vers la bas et dans le réservoir pour transporter ladite matière, et ladite station de prélèvement comprenant une zone de docking (15) où le réservoir peut être transféré d'une position de dépôt vers la zone de prélèvement, un dispositif de serrage (20) à déplacement vertical étant prévu à la zone de prélèvement et comprenant un membre comprimé (22) destiné à s'appliquer contre la face inférieure du fond de réservoir (2a) en la position de prélèvement du réservoir, et un organe de serrage (23) adapté à être transféré vers une position de serrage contre le réservoir (2) et à pressuriser le fond de réservoir (2a) par rapport à la paroi de réservoir (2b) de sorte que le fond de réservoir est détendu du poids de la charge par rapport à la paroi de réservoir.

2. Station de prélèvement selon la revendication 1, **caractérisée en ce que** (i) le membre comprimé (22) est agencé comme un organe de serrage (23) destiné à s'appliquer contre la face inférieure (2c) du fond de réservoir (2a) en la position de serrage et qui pressurise le fond de réservoir orienté verticalement vers le haut par rapport à la paroi de réservoir (2b), ou que (ii) l'organe de serrage (23) est construit pour l'attaque à la paroi de réservoir, par laquelle la paroi de réservoir (2b) peut être mue verticalement vers la bas par rapport au fond de réservoir lors de l'application continue du membre comprimé (22) contre la face inférieure du fond de réservoir.

3. Station de prélèvement selon les revendications 1 ou 2, **caractérisée en ce que** le membre comprimé (22) peut être transféré, au moyen du dispositif de serrage (20), en une position neutre retirée par rapport à la position de serrage, ledit réservoir en sa position neutre retirée pouvant être transféré vers la zone de prélèvement.

4. Station de prélèvement selon la revendication 3, **caractérisée en ce que**, en la position neutre, le membre comprimé (22) est arrangé sur la zone de docking (15) jusqu'au niveau ou au-dessous du niveau du bord inférieur (2d) du réservoir.

5. Station de prélèvement selon l'une des revendications 1 à 4, **caractérisée en ce que** le dispositif de serrage (20) est construit ou ajusté pour l'exercice d'une force de pression sur la face inférieure du fond de réservoir (2a), force de pression qui soulève le fond de réservoir par rapport à la position neutre du dispositif de serrage et relativement à la paroi de réservoir (2b) au moins par endroits.

6. Station de prélèvement selon l'une des revendications 1 à 5, en combinaison avec la revendication 3, **caractérisée en ce que** le dispositif de serrage (20) est adapté ou ajusté de sorte que le fond de réservoir (2a) qui est bombé vers la bas en la position neutre du dispositif de serrage, est arrangé au moins essentiellement d'une manière plane.

7. Station de prélèvement selon l'une des revendications 1 à 6, **caractérisée en ce que** le membre comprimé (22) peut s'appliquer contre la face inférieure du fond (2c) du réservoir en deux dimensions.

8. Station de prélèvement selon l'une des revendications 1 à 7, **caractérisée en ce que**, pour le prélèvement de la charge, la plaque de suite (50) peut être pressurisée contre la surface de la charge, et **en ce que** la plaque de suite (50) peut être pressurisée ou est ajusté pour la pressurisation contre la surface de la charge avec une force de serrage qui surmonte la force de serrage du membre comprimé (22) contre le fond de réservoir (2a).

9. Station de prélèvement selon la revendication 8 et la revendication 3, **caractérisée en ce que** le dispositif de serrage (20) peut retourner vers sa position neutre au moins en partie lorsque le membre comprimé (22) est sorti et lors d'une pressurisation par la plaque de suite (50).

10. Station de prélèvement selon l'une des revendications 1 à 9, **caractérisée en ce que** le membre comprimé (22) peut être actionné par le biais d'un cylindre pneumatique ou hydraulique (24).

11. Station de prélèvement selon l'une des revendications 1 à 10, **caractérisée en ce qu'**on a prévu à la station de prélèvement au moins deux zones de prélèvement (5, 6), deux dispositifs de transport (10, 11) et deux zones de docking (15, 16) pour l'arrangement simultané et, en cas échéant, pour la vidange simultanée desdits au moins deux réservoirs (2, 3) à vider.

12. Station de prélèvement selon la revendication 11, **caractérisée en ce que** les deux dispositifs de serrage (20, 21) présentent un dispositif de génération de pression (25) commun pour la pressurisation des deux dispositifs de serrage (20, 21).

13. Station de prélèvement selon la revendication 11 ou 12, **caractérisée en ce que** lesdits au moins deux dispositifs de serrage (20,21) peuvent être actionnées simultanément.

14. Station de prélèvement selon la revendication 11 ou 12, **caractérisée en ce que** lesdits au moins deux dispositifs de serrage (20, 21) peuvent être actionnés l'un indépendamment de l'autre, de préférence indépendamment en temps et/ou concernant l'hauteur de la force de serrage du membre comprimé ou la position de l'avance du membre comprimé.

15. Station de prélèvement selon l'une des revendications 1 à 11, **caractérisée en ce que** le dispositif de serrage (20, 21) respectif présente une indication de la force/voie en rapport avec le dispositif de serrage.

16. Procédé pour le prélèvement des matières fluides comme une charge (4) hors d'au moins un réservoir (2) comprenant un fond (2a) sur une station de prélèvement (1), ladite station de prélèvement comprenant une zone de prélèvement (5) où est disposé ledit réservoir (2) en sa position de prélèvement lors du prélèvement de la matière fluide, avec un dispositif de transport (10) qu'est actionné pour le prélèvement de la matière fluide, la zone d'entrée du dispositif de transport pour le milieu fluide étant formée comme un organe aspirateur, et avec une plaque de suite qu'on fait descendre dans le réservoir pour l'extraction de ladite matière, et une zone de docking (15) où ledit réservoir est transféré d'une position de dépôt vers la zone de prélèvement, et en la zone de prélèvement (5) est actionné un dispositif de serrage (20) à déplacement verticale, ledit dispositif comprenant un membre comprimé (22) qui est appliqué, en la position de prélèvement du réservoir, contre la face inférieure du fond de réservoir (2a), et un organe de serrage (23) est transféré vers une position de serrage sur ledit réservoir (2) et pressurise le fond de réservoir (2a) par rapport à la paroi de réservoir (2b) et détend le fond de réservoir du poids de la charge par rapport à la paroi de réservoir de sorte qu'un bombement du fond de réservoir vers la bas et par rapport à la paroi de réservoir est diminué ou annulé.

17. Procédé selon la revendication 16, **caractérisé en ce que** le dispositif de serrage (20) est configuré ou ajusté pour l'exercice d'une pression sur le fond de réservoir (2a), pression qui correspond au poids de remplissage d'un réservoir positionné en la zone de prélèvement.
